# EUROPÄISCHE PATENTSCHRIFT

(11) **EP 3 957 156 B1**
(45) Veröffentlichungstag und Bekanntmachung des Hinweises auf die Patenterteilung: **13.08.2025**
(21) Anmeldenummer: 21192031.9
(22) Anmeldetag: 18.08.2021
(51) Int. Cl.: A01D 45/00

(54) **WINDREINIGER**
WIND CLEANER
NETTOYEUR À AIR

(30) Priorität: 18.08.2020 DE 102020121693
(43) Veröffentlichungstag der Anmeldung: 23.02.2022
(73) Patentinhaber: Wolf Anlagen-Technik GmbH & Co. KG, 85290 Geisenfeld (DE)
(72) Erfinder: OBSTER, Erich, 85104 Pförring (DE)
(74) Vertreter: Meyer, Thorsten

(56) Entgegenhaltungen:
- CN-U- 202 738 479
- CN-U- 208 333 009
- ES-T3- 2 377 270
- US-A- 3 754 382
- US-A- 4 530 203
- US-A- 5 570 657

## Beschreibung

Die Erfindung betrifft einen Windabsauger mit Rollenbandseparator für eine Erntemaschine, insbesondere eine Hanfpflanzen-Erntemaschine, zum Se-parieren von Teilen, insbesondere von Blüten oder Dolden (US 3 754 382 A).

Aufgabe der Erfindung ist es einen verbessertes Windabsauger für eine Erntemaschine, insbesondere eine Hanfpflanzen-Erntemaschine zur Verfügung zu stellen, bei der die Leistung bei der Ernte verbessert ist.

Diese Aufgabe wird durch ein Windabsauger nach den Merkmalen des Anspruchs 1 gelöst.

Weitere vorteilhafte Ausgestaltungen ergeben sich aus den weiteren Unteransprüchen oder deren mögliche Unterkombinationen.

Nachfolgend wird die Erfindung anhand der Zeichnungen weiter erläutert. Im Einzelnen zeigt die schematische Darstellung in:

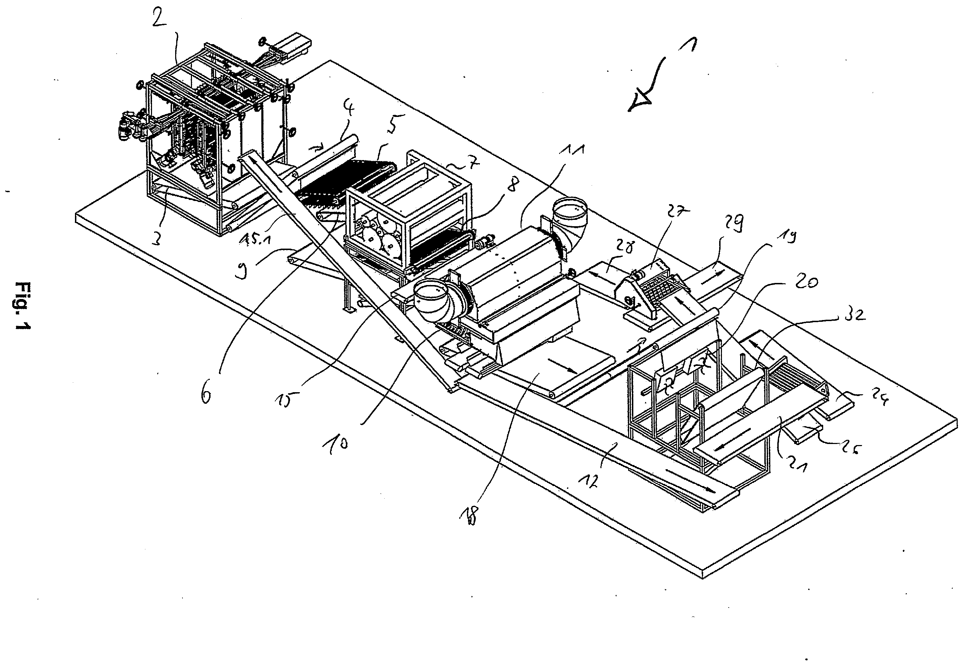

- Fig. 1: eine schematische Darstellung einer Hanfpflanzen-Erntemaschine von schräg oben,
- Fig. 2: die Hanfpflanzen-Erntemaschine aus Fig. 1 von der Seite gesehen,
- Fig. 3: die Hanfpflanzen-Erntemaschine aus Fig. 1 von oben gesehen,
- Fig. 4: eine schematische Ansicht einer Hanfpflanze,
- Fig. 5: eine schematische Ansicht der Teile als Erntegut einer Hanfpflanze,
- Fig. 6: eine schematische Schnitt-Darstellung eines Bandpflückers einer Hanfpflanzen-Erntemaschine,
- Fig. 7: eine schematische Detail-Darstellung eines Trommelbands eines Bandpflückers einer Hanfpflanzen-Erntemaschine,
- Fig. 8: eine schematische Schnitt-Darstellung eines Bandpflückers einer Hanfpflanzen-Erntemaschine quer zur Prozessachse,
- Fig. 9: eine schematische Schnitt-Darstellung eines Bandpflückers einer Hanfpflanzen-Erntemaschine längs zur Prozessachse,
- Fig. 10: Detail F aus Fig. 8,
- Fig. 11: Detail XI aus Fig. 9,

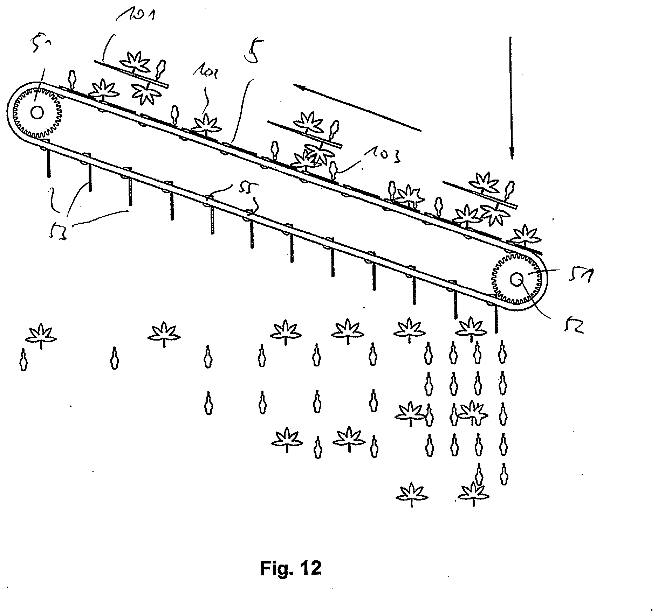

- Fig. 12: eine schematische Ansicht eines Klappbands in schematischer Schnittdarstellung,

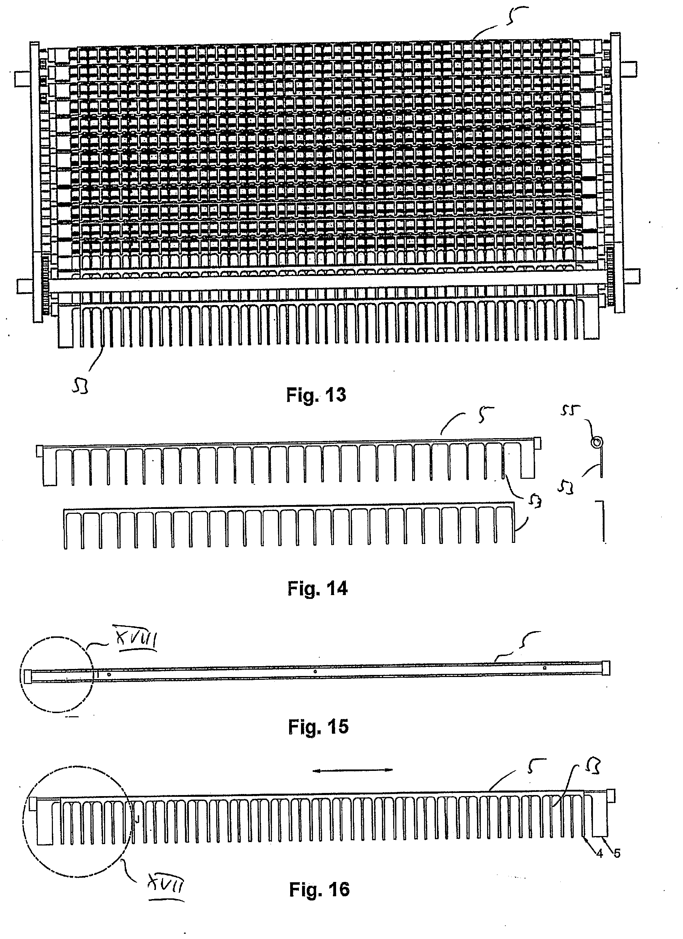

- Fig. 13: eine schematische Draufsicht auf ein Klappbandaus Fig. 12,
- Fig. 14: eine schematische Detail-Darstellung der Teile eines bezüglich der Öffnungsweite einstellbaren Klappbands,
- Fig. 15: eine schematische Ansicht von oben auf eine Klappbandlamelle,
- Fig. 16: eine schematische Ansicht auf die Klappbandlamelle aus Fig. 15,

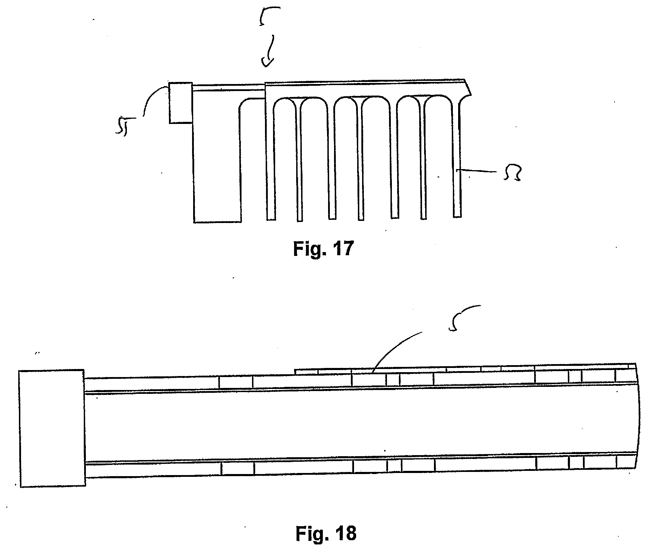

- Fig. 17: Detail XVII aus Fig. 16,
- Fig. 18: Detail XVIII aus Fig. 15,
- Fig. 19: eine schematische Ansicht auf Pflückfinger,
- Fig. 20: eine schematische Ansicht auf eine Pflückfingeranordnung auf der Oberfläche eines Trommelbands mit Versatz zueinander,
- Fig. 21: eine schematische Ansicht auf die Leisten, die die Pflückfinger tragen,
- Fig. 22: eine schematische Ansicht auf die Leisten mit den Pflückfingern aus Fig. 21 aus einer Ansicht von schräg oben,

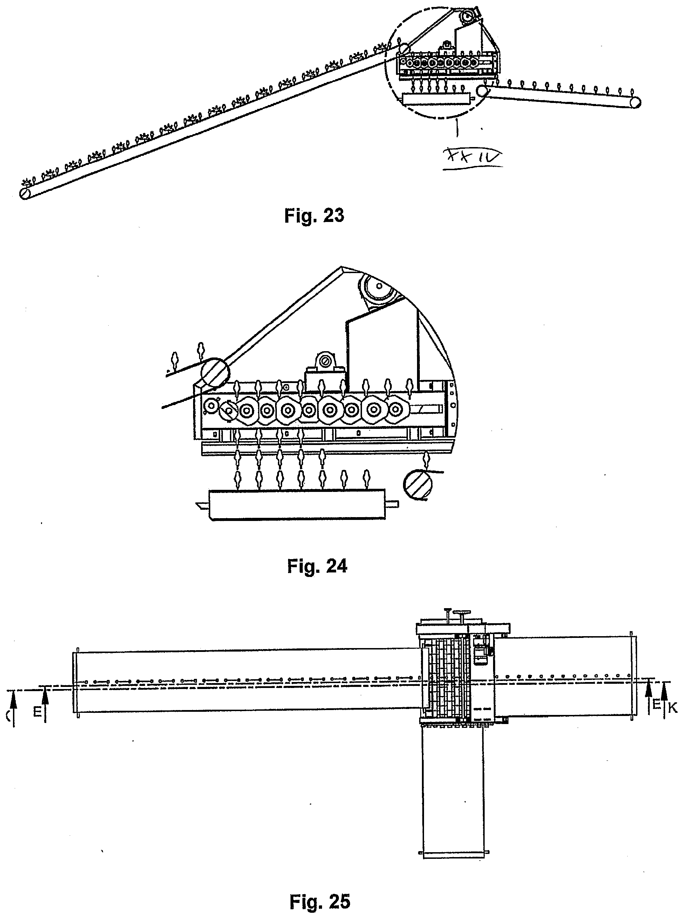

- Fig. 23: eine schematische Schnittdarstellung eines Rollenreinigers,
- Fig. 24: eine Detaildarstellung des Details XXIV aus Fig. 23,
- Fig. 25: eine schematische Draufsicht auf den Rollenreiniger aus Fig. 23,

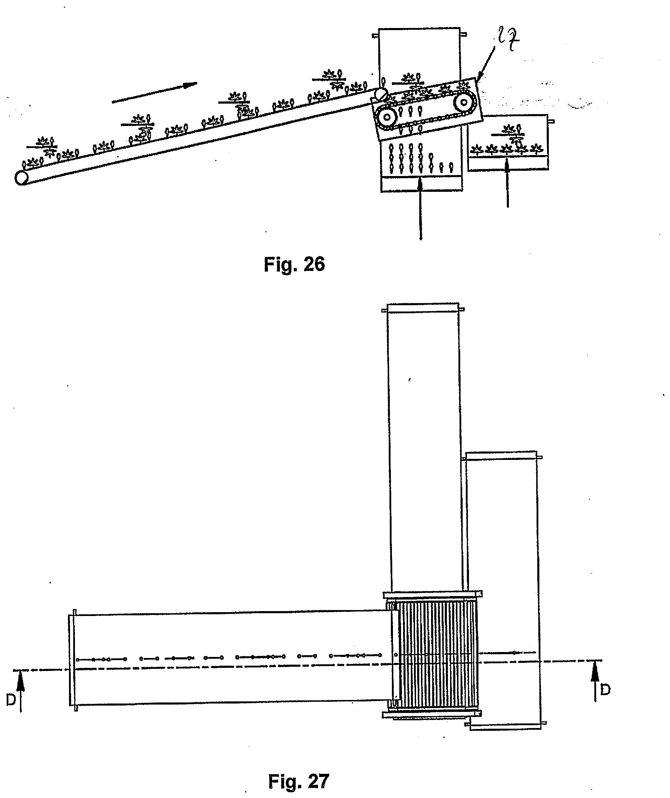

- Fig. 26: eine schematische Schnittdarstellung eines Rollensortierers,
- Fig. 27: eine schematische Draufsicht auf den Rollensortierers aus Fig. 26,

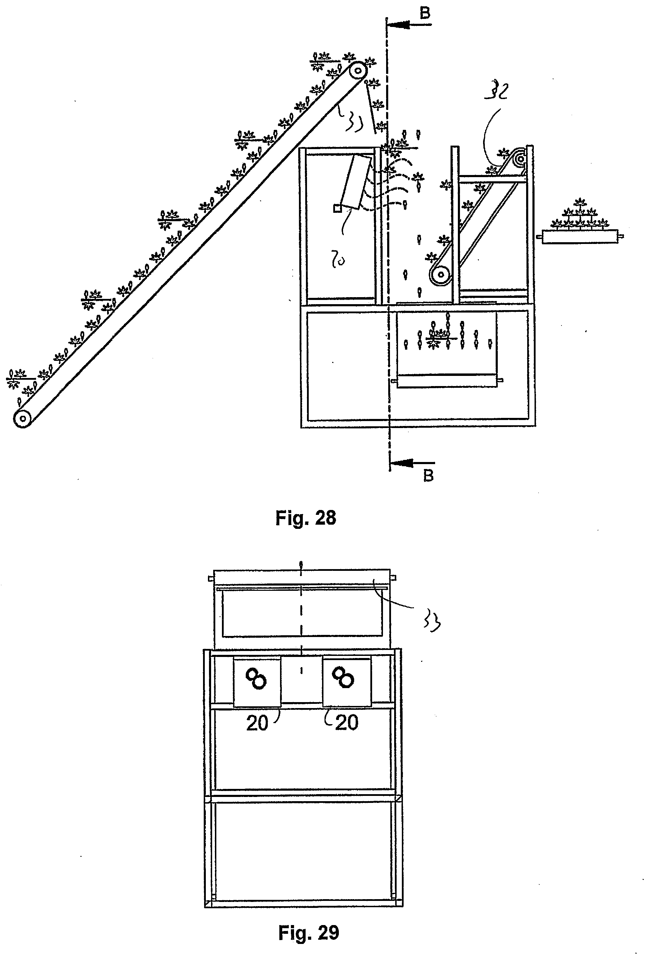

- Fig 28: bis 32 zeigen Windreiniger für das Erntegut.

Die in den Figuren gleichen Bezugsziffern bezeichnen gleiche oder gleich wirkende Elemente.

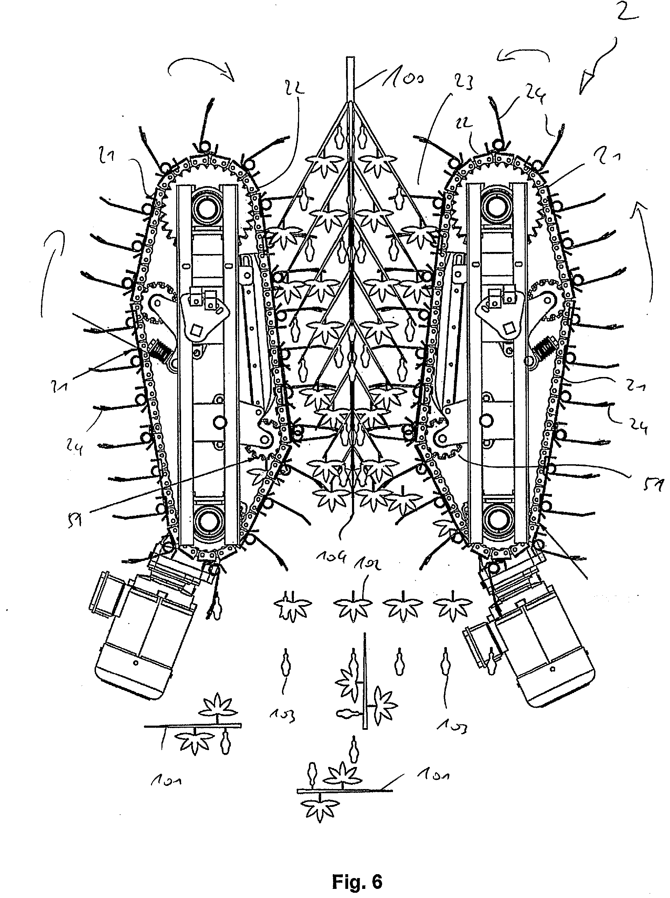

Die Hanfpflanze wird über den Einzugsarm 1 in den Pflücker befördert. Figur 6

Die Pflanze wird mit dem Stängel, der am Boden abgeschnitten wurde, nach oben eingehängt.

Die Pflanze hängt dann mit den Blüten nach unten. (Prinzip Christbaum hängend nach unten)

Der Pflücker 2 ist mit verschiedenen Pflückfingern ausgestattet und einer Kurve, wo die Form der Pflanze angepasst werden kann.

Beide Pflückbänder laufen von oben nach unten, im inneren Bereich laufen beide Pflückbänder nach unten.

Hier läuft die Pflanze hängend durch diese beiden Pflück-Bändern.

Die Pflanzen haben verschieden Längen und Formen. In der Regel haben die Pflanzen einen buschigen Anfang, wen sie aus dem Boden wachsen. (Christbaum Form).

Die Pflanze wird ca 5cm über dem Boden abgeschnitten, gedreht und dieser buschige Teil mit dem Hauptstängel, bei uns im Pflücker eingehängt.

Und die Pflanze hat einen spitz zu laufenden Kopf.

So das in der Mitte der Pflanze die meisten Blüten sich befinden.

Am Kopfende die schönsten, wertvollsten und die größten Blüten.

Diese A Ware Blüten sind am Hauptstängel und schwer zu ernten, da sie direkt mit dem Hauptstängel verbunden sind.

Aus diesem Grund ergibt sich folgende Struktur des Pflückers: Man braucht nicht ein parallel laufendes Pflückband, sondern der Bauch der Pflanze muss gesondert geerntet werden.

Der Parallel Pflücker ist zu aggressiv. Also braucht man eine Kurve in jedem Pflückband, d.h die die Bänder im Bauchbereich Kopfbereich der Pflanze, näher zusammen laufen lässt.

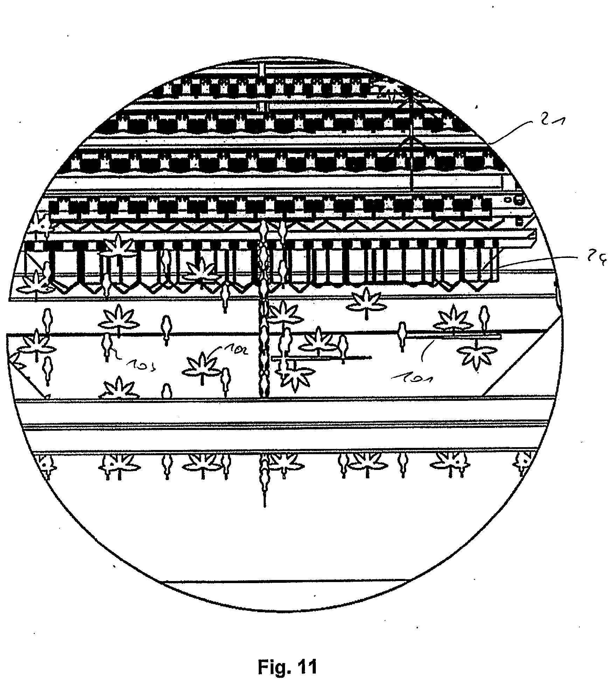

Das es unterschiedliche Längen und Bauchformen von Pflanzen gibt, muss diese Kurve in der Höhe und in der Tiefe verstellbar sein. Figur 11
Diese Kurve kann als Formteil oder als Zahnrad/Zahnradgruppe, verstellbar nach innen und oben und unten verschoben werden.

Eine Feder im oberen Lagerbereich, gleicht die Länge der Kette individuell aus, so das immer die richtige Federspannung anliegt. Alternativ gibt es ein gegenseitiges Spannrad mit Feder (siehe Bild 1).

Die Pflückfinger sind Ausschlag gebend für die schonende und komplette Pflücke.

Anders wie bei Hopfen, muss die Pflücke schon nach maximal 50 cm Länge des Pflückbandes erfolgt sein. ( Bei Hopfen 4 bis 6 Meter Länge des Pflückbandes )

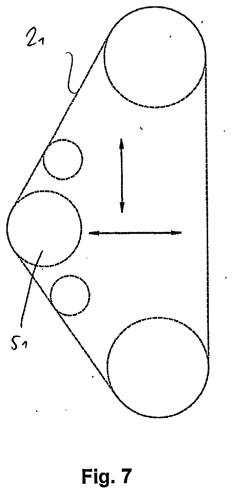

Um die Blüten am Hauptstängel zu pflücken, braucht man die neuen Pflückfinger, die am Ende anstatt der üblichen Spitze, eine gerade Form haben. Figur 7 Die gerade Form streift am Stängel direkt entlang und ergreift die Blüten, die dann abreißen.

Die ursprüngliche Form des Spitzen Fingers, ist an dieser Stelle ausgewichen und die Blüte blieb beschädigt hängen.

Die Lösung ist das am Anfang 2 bis 3 spitzige Finger sich befinden, die die Pflanze ausdünnen.

Dann z.B. nur 4 Finger mit der neuen Form, die die besten Blüten abtrennen.

Die folgenden Finger sind wieder die üblichen spitzigen, die die restlichen Dolden aus der Pflanze holen.

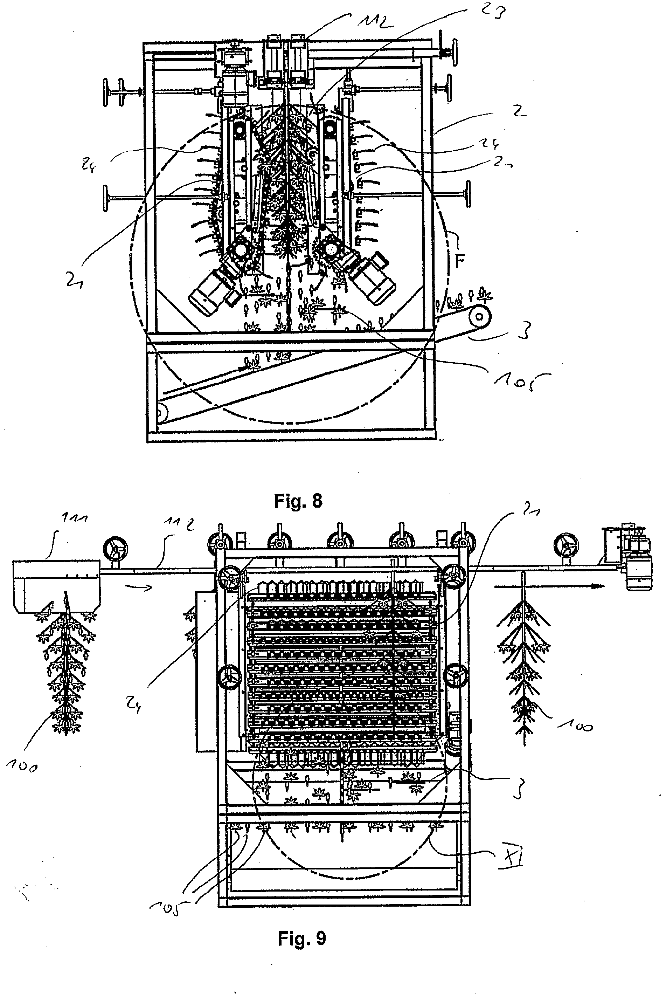

Die Anzahl der Finger in der Tiefe/Länge des Pflückbandes nach hinten, ergibt die Aggressivität. Figur 8

Es sollen so wenig wie möglich die Fasern der Pflanze hervor kommen, da diese bitter im Geschmack sind und schwer wieder zu entnehmen.

Es wäre ev. gut für die Zukunft zwei Pflücker hintereinander zu haben.

Bis dato ist der Pflücker ca 2 Meter tief.

Der erste ca 70 cm lang, bestückt wie oben beschrieben.

Dann eine Lücke mit ca 40 cm, so könnte die Pflanze sich wieder öffnen.

Der zweite Pflücker wäre dann im Anschluss, ebenso 70 cm lang mit normalen spitzigen Fingern.

So hätte man ein Qualitätspflücken am Anfang. Und dann ein Nachpflücken hinterher, das man individuell auf die Fasern einstellen kann.

Das gepflückte Gut( Blätter, Blüten, Stängel, Stängel mit Blüten, Seitenarme, ev ganze Pflanzen) fällt auf das Band 3 und wird auf das Band 4 befördert.

Band 4 lässt das Gut auf das Klappband 5 herunterfallen. Hier erfolgt eine Art Siebfunktion.

Kleine Blüten und Blätter fallen schon die ersten 20 cm durch, auch ca 90 Prozent der großen Blüten. Zusammenhängende Stängel mit Blüten,
Seitenarme oder komplette Pflanzen, laufen mit dem Gitterband zum Nachpflücker 7.( Homogenisierer)

Unter dem Klappband ist ein Gummiband 6, dieses kann noch mal in der Neigung verstellt werden.

Grund für dieses Band ist, es fallen teilweise nach kurzer Strecke am Klappband, noch Teile hindurch, die zum Nachpflücker sollen.

Mit dem Gummiband kann man den Punkt was nach unten fallen soll und was weiter zum Nachpflücker soll, verschieben.

Auch hat das Gummiband die Funktion, sicher das Material das von oben vom Klappbandende, runter fällt, in den Nachpflücker 7 zu befördern.

Da das Gummiband direkt an die Zubringerwalzen des Nachpflückers 7 angeschlossen werden kann.

Es kann nichts vom Klappband Ende nach hinten weg fallen und in das Band 9 gelangen.

Sondern das Ende des Kappbandes lässt das Material direkt auf die Zubringerwalzen des Nachpflückers fallen.

Dieser Bypass separiert die zum Nachpflücker notwendige Ware.

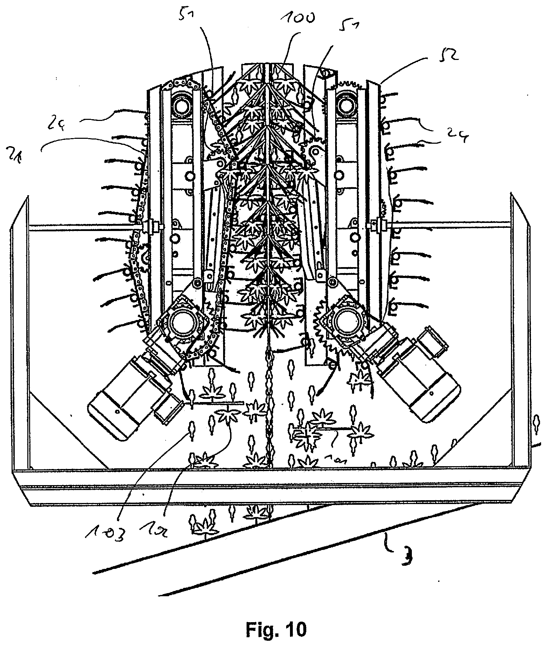

Kurze Erklärung Klappband: Das Band besteht aus vielen Mitnehmerlamellen. Diese sind ca 15 cm Breit, in diesen Blechen sind Rechteckt ausgestanzt, Öffnungen wo die Blüten durchfallen können, große Stängel und Blätter oder ganze Pflanzen bleiben liegen und werden weiter transportiert. Figur 9 und 10

Da die Lamellen auf der Unterseite des Bandes zurücklaufen, müssten die Blüten zweimal durch die Rechtecke fallen.

Somit sind die Lamellen an der Seite mit Lagern ausgestattet, am Ende des Bandes kippen sie nach vorne weg und hängen stehend in der Kette, somit ist der gesamte Querschnitt der Lamellen offen, es muss kein Material durch die Rechtecke unten fallen.

Die Lamellen klappen automatisch beim hoch fahren in die obere Lage, wieder auf ihre liegende Position
Die Blüten fallen durch und werden durch den Nachpflücker 7 nicht beschädigt.

Bypass zur Qualität Sicherung der Blüten.

Der Nachpflücker 7 pflückt die Seitenarme und die ev ganzen Pflanzen, nicht in der Qualität wie der Bandpflücker.

Da aber ca 10 bis 20 Prozent vom Hauptpflücker, diesen Prozess benötigen, ist er ein wichtiges Bindeglied in der Gesamt Ernte.

Das durch den Nachpflücker 7 erzeugte Material fällt auf das Klappband 8 unter dem Nachpflücker.

Diese Klappband hat die Aufgabe wie das Klappband zuvor, es lässt die großen abgeernteten Teile auf dem Band liegen und die Blüten durch fallen.

Die Blüten und Kleinmaterial das durch fällt, gelangt auf Band 9.1

Das Material auf dem Klappband zu Von da aus geht es auf Band 15 und somit wieder zurück in den Kreislauf zum Nachpflücker 7. (Erster Bypass).

Band 9 fördert das Material zum Rollenreiniger 10.

Blüten und ein Teil der Blätter und Stängel, fallen durch auf Band 18. Und werden mit Band 19 zum Windreiniger 20 befördert.

Große Teile und Stängel, bzw. komplette Pflanzen, werden über die Rollen transportiert.

Nach dem Rollenreiniger 10 ist ein Band 13 und 14, das die großen Blätter und Stängel, so wie ungepflücktes Material, wieder über Band 15 zum Nachpflücker führen. Zweiter Bypass.

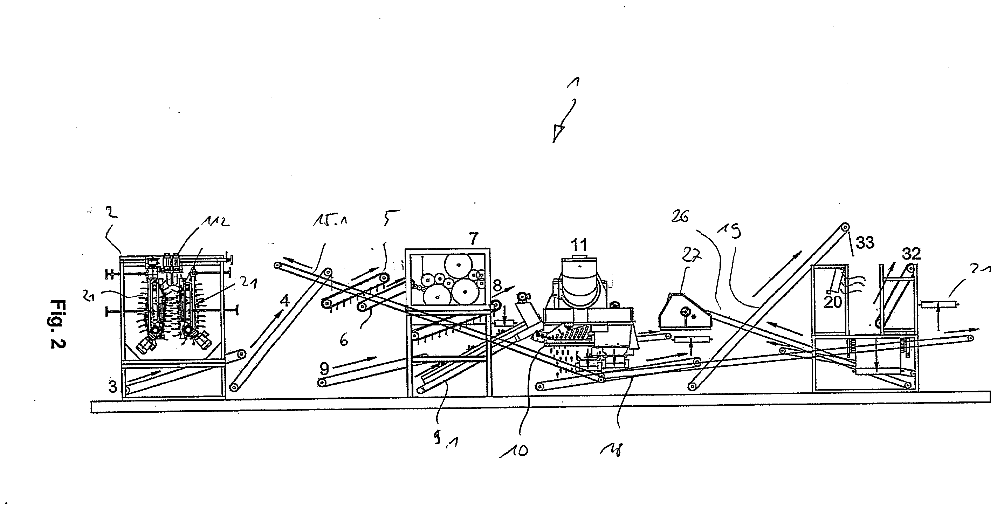

Über dem Rollenreiniger 10 ist eine Windabsaugung 11, die Blätter hochzieht und mit einem kleinen Gitterband zu Band 16 befördert. Figur 2

Band 16 läuft zu Band 17, zum Abfall.

Die Einheit Band 13/14 und das Band 16 sind verschiebbar in Längsrichtung, so das im Bypass gefahren werden kann. ( 3 Bypass )

Bei bestimmten Sorten braucht man diesen Rücklauf nicht, da die Ware nicht die Anforderungen hat, bzw das Material nicht so viele Stängel und ganze Pflanzen enthält. so kann man den Rollenreiniger kurzschließen, das Material fällt direkt auf das Band 18.

Band 13 übernimmt dann die Funktion von Band 16 und befördert die Blätter von der Absaugung zum Abfall.

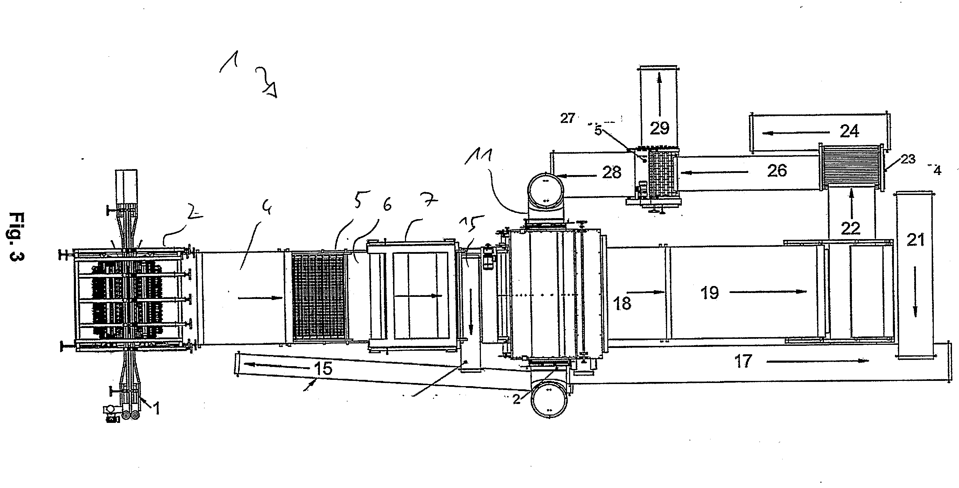

Zurück zum Hauptfluss mit Band 19 zum Windreiniger 20. Figur 3

Das Material fällt von Band 19, zwischen dem Wind 20 und den Gummibändern 32.

Wichtig ist hier das alles Material durch die beiden Einheiten fällt, ohne die Gummibänder zu berühren.

Der Wind bläst die Blätter in Richtung Gummiband. Das Gummiband fördert durch die Noppen auf dem Gummiband und durch den Anpressdruckes des Windes, die Blätter und teilweise Stängel nach oben.

Diese fallen auf der Rückseite in das Band 21 und werden zum Band 17, Abfall befördert.

Die Gummibänder 32 sind in der Neigung verstellbar. Flacher heißt mehr Abtransport.

Steiler heißt weniger Abtransport. Es sollte verhindert werden, das die Blüten auf das Band gelangen, da sie auch nach oben gezogen werden könnten.

Die Bänder sind auch noch in der Geschwindigkeit verstellbar.

Die Windeinheiten 20 sind drei Stück in der Breite und das einmal übereinander.

Diese Einheiten müssen in der Neigung verstellbar sein, so wie in der Distanz, bzw auch nach oben und untern verschiebbar.

Auch sind sie in der Leistung durch einen Fu regelbar. Somit kann man die ideale Kurve erreichen, wo die Blätter und großen Stängel Richtung Gummiband gedrückt ( geblasen ) werden und die Blüten vorher durchfallen auf das Band 22.

Auch fallen zum Teil Blätter hier noch mit auf das Band 22 und vereinzelt Stängel oder Fremdmaterial.

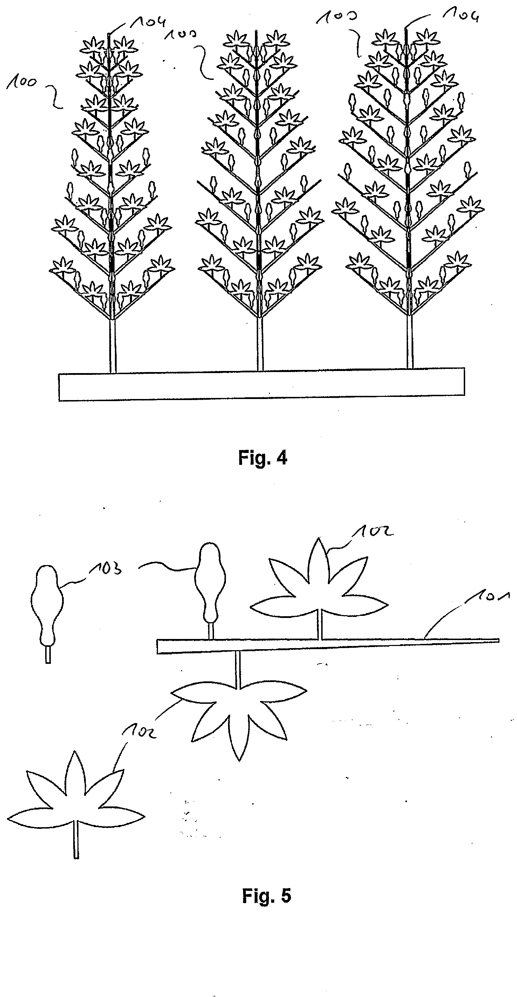

Band 22 befördert das Material zum Rohrbandsortierer 23. Figur 4 Dieser trennt die großen Blüten und befördert sie zu Band 24, dann auf Band 25. Bei Band 25 und Band 24 kann die Nachlese passieren. Die besonderen Blüten in bester Qualität werden auf Band 31, mit Hand geworfen. Bypass Band Nummer 4.

Das Besondere an dem Rohrband ist, das die Rohre starr auf einer Kette in einem bestimmten Abstand montiert sind.

Die Rohre bewegen sich im Ganzen auf einer Kette gezogen nach vorne.

Die großen Blüten bleiben beruhigt in den Distanzen der Rohre liegen. Die kleineren Blüten fallen durch, auch Blätter zum Teil.

Das Besondere an dem Bypass Nummer Band 4 ist, das hier die A Qualität aussortiert wird. Die großen wertvollen Blüten werden sortiert von der anderen Qualität.

Das kleinere Material fällt durch das Rohrband 23 und wird über Band 26 zum Rollenreiniger 27 gebracht. Figur 4

Material das die Rollen aus transportieren, gelangt über Band 28, zurück über das Klappband 5, zum Nachpflücker 10.

Ein Bypass 5 ist angeordnet.

Dieser Bypass ist gedacht für das Zufallsmaterial, das nicht in den vorgeschalteten Systemen aussortiert werden konnte.

Große Blätter und Stängel, die im System durch gerutscht sind, werden hier wieder dem Nachpflücker 7 zu geführt.

Das Material das durch den Rollenreiniger 27 fällt, wird über das Band 29 auf das Band 30 befördert ausgetragen. Figur 5

Das Band 30 dient ebenso als Sortierband, gute Blüten werden mit Hand verlesen und auf das Band 31 geworfen.

Hier ist noch mal eine Handverlesen der Blüten in verschiedene Qualitäten möglich.

### Nochmals detaillierter:

Die Figuren zeigen eine Hanfpflanzen-Erntemaschine 1, zum Pflücken von Blüten oder Dolden 103 von einer zu erntenden Hanfpflanze 100 mit einem Stängel 101 mit Blättern 102 und Blüten oder Dolden 103, wobei ein Einzugsarm 111 zur Aufnahme und Halterung einer an Boden abgeschnittenen über Kopf hängenden Hanfpflanze 100 an deren Stängel 101 vorgesehen ist, wobei der Einzugsarm 1 die Hanfpflanze 100 über eine Schienenführung 112 zu und durch wenigstens einen oder mehrere im Prozessweg hintereinander angeordnete Bandpflücker 2 führt, wobei der wenigstens eine Bandpflücker 2 wenigstens zwei sich gegenüberliegende Trommelbänder 21 aufweist, wobei diese in dem Zwischenraum zwischen diesen einen Pflückraum 23 für die zu erntenden Pflanzen 100 bilden, wobei die Oberflächen 22 der Trommelbänder 21 im Pflück-raum 23 nach unten laufend angetrieben sind, wobei die Pflanzen 100 vertikal, mit der Pflanzenspitze 104 nach unten hängend durch den Pflückraum 23 in einer Durchlaufrichtung an den Trommelbändern 21 vorbeigeführt werden, und dass das dem Bandpflücker 2 im Weg des durch diesen abgepflückten Ernteguts 105 in Form von Dolden, Blüten, Blättern und anderen Pflanzenteilen folgend ein Klappband 5 zum Transport und zur Aussiebung des zerkleinerten Ernteguts 105 zugeordnet ist, über ein Klappband 5 zum Transport und zur Aussiebung des zerkleinerten Ernteguts 105 zugeführt wird, wobei das Klappband 5 über Rollen 51 umlaufend, an einem Gestell 52 geführt, mit daran angelenkten Klapprechen 53 ausgestaltet ist, wobei die Klapprechen 53 mit ihren Spitzen 54 von der Oberfläche des Klappbands 5 über eine Schwenkachse 55 senkrecht zur Laufrichtung des Klappbands 5 wegklappbar ausgestaltet sind, wobei durch die Zwischenräume der Fortsätze der Klapprechen 53 Teile des Ernteguts 105 beim Transport über das Klappband 5 entsprechend ihrer Größe durch Hindurchfallen durch die Zwischenräume der Klapprechen 53 herausselektiert werden können.

Das nicht durch das Klappband 5 aussortierte Erntegut 105 wird einem Nachpflücker 7 zugeführt, wobei dieser verschiedene Sternringwalzen 71 mit Sägezahnähnlichen Fortsätzen, Rupfwalzen mit Finger-Fortsätzen und Führungswalzen aufweist, wobei insbesondere bevorzugtes abgesondertes Erntegut über ein Klappband 8 mit Klapprechen 83 absepariert wird.

Das nicht durch das Klappband 5 oder einen Nachpflücker 7 mit dem Klappband 8 aussortierte Erntegut wird einem hierzu vorgesehenem Windabsauger 11 mit einem Rollenbandseparator 10 zugeführt, wobei bevorzugtes Erntegut durch den Rollenbandseparator nach unten fällt und nicht benötigtes leichtes Material durch den Windabsauger 11 nach oben von dem Rollenbandseparator weg gegen ein angetriebenes Gitterband 10 gesaugt wird und weggeführt wird.

Das nicht durch das Klappband 5 und/oder den Nachpflücker 7 und/oder den Windabsauger 11 aussortierte Erntegut wird einem Windreiniger 20 zugeführt, wobei dieser wenigstens ein Gebläse so angeordnet aufweist, dass vor diesen von einem Transportband 19 herunter fallendes Ern-tegut mit dem Wind des/r Gebläse/s so beaufschlagt wird, dass leichtes Material im Erntegut gegen wenigstens ein gegenüber dem wenigstens einen Gebläse angeordnete schräg angestellten und im Anstellwinkel verstellbaren Transport-band 32 zu dessen Abseparierung geblasen wird und schwereres Restmaterial auf ein darunter angeordnetes Transport-band 22 fällt.

Das nicht durch das Klappband 5 und/oder den Nachpflücker 7 und/oder den Windabsauger 11 und/oder den Windreiniger 20 aussortierte Erntegut wird einem Rohrbandsortierer 23 zugeführt, wobei die Rohre des Rohrbandsortierers 23 starr auf einer Kette in einem bestimmten Abstand montiert sind, wodurch sich diese im Ganzen auf einer Kette gezogen nach vorne bewegen.

Das nicht durch das Klappband 5 und/oder den Nach-pflücker 7 und/oder den Windabsauger 11 und/oder den Wind-reiniger 20 und/oder dem Rohrbandsortierer 23 aussortierte Erntegut wird einem weiteren Rollenreiniger 27 zugeführt.

Das nicht durch das Klappband 5 und/oder den Nachpflücker 7 und/oder den Windabsauger 11 und/oder den Windreiniger 20 und/oder dem Rohrbandsortierer 23 und/oder dem weiteren Rollenreiniger 27 aussortierte Erntegut im Prozesslauf einer vorderen der genannten Stationen über hierzu vorgesehene selektiv aktivierbare Transportbänder wieder zugeführt wird und die Behandlung und Aussortierung erneut zu erfahren.

Das erfolgreich passierte Material wird auf hierzu vorgesehenen End-Bändern oder -Behältnissen gesammelt, wo weitere Nachlese erfolgen kann.

An den Oberflächen der Trommelbänder sind 21 Pflückfinger 24 vorgesehen sind, wobei diese insbesondere mit einem Abstand zueinander angeordnet, wobei eine die Oberflächen der Trommelbänder wenigstens teilweise in den Pflückraum (23) hineindrängende Bandoberflächenform-Einstellungsvorrichtung 51 vorhanden ist, vermittels welcher die sich gegenüberliegenden Oberflächen der Trommelbänder aufeinander zu bauchig eingestellt werden können.

Auf den Klapprechen können wenigstens den Fortsätzen der Klapprechen im wesentlichen formgleiche Schiebekulissen angeordnet sein, die auf den Klapprechen senkrecht zur Laufrichtung des Bandes verschiebbar angeordnet sind, wobei durch die Verschiebung der Schiebekulissen aus der Überdeckung mir den Klapprechen heraus die Durchfallöffnung der Klapprechen effektiv verringerbar ist.

Das Klappband zum Transport und zur Aussiebung von darüber transportiertem zerkleinerten Erntegut unterschiedlicher Größe für eine Erntemaschine, insbesondere eine Hanfpflanzen-Erntemaschine, zum Pflücken von Blüten oder Dolden von einer zu erntenden Pflanze, wobei die Pflanze insbesondere eine Hanfpflanze ist, wobei das Klappband ein umlaufendes über Rollen an einem Gestell geführtes Band mit daran angelenkten Klapprechen ist, wobei die Klapprechen dadurch mit ihren Spitzen von der Oberfläche des Bandes über eine Schwenkachse senkrecht zur Laufrichtung des Bandes wegklappbar ausgestaltet sind, wobei durch die Zwischenräume der Fortsätze der Klapprechen Teile des Ernteguts beim Transport vermittels des Klappbands entsprechend ihrer Größe durch Hindurchfallen herausselektiert werden können, wobei auf den Klapprechen wenigstens den Fortsätzen der Klapprechen im wesentlichen formgleiche Schiebekulissen angeordnet sind, die auf den Klapprechen senkrecht zur Laufrichtung des Bandes verschiebbar angeordnet sind, wobei durch die Verschiebung der Schiebekulissen aus der Überdeckung mir den Klapprechen heraus die Durchfallöffnung der Klapprechen effektiv verringerbar ist.

Insbesondere führt das Klappband schräg nach oben und durch die zwischen Klapprechen und Schiebekulissen gebildeten Durchlässe die Größe der Erntegutteile entsprechend der einstellbaren Verschiebung der Klapprechen und der Schiebekulissen zueinander vorgewählt werden können.

Die Einstellung der Durchlässe durch Lageverschiebeung der Schiebekulissen auf bzw. zu den Klapprechen durch eine an dem ortsfesten Teil des Gestells angeordnete Verschiebe-Gleitflächen erfolgt.

Die Schiebekulissen an den Klapprechen gelagert sind, wobei die Schiebekulissen durch Langlöcher und durch diese hindurchragende Befestigungselemente gegenüber den Klapprechen verschiebbar gelagert sind.

Die Pflückfinger sind durch an den Oberflächen der Trommelbänder in den Pflückraum hineinragende federnd gelagerte Bügel oder Ösen ausgebildet sind, wobei diese insbesondere aus einem gebogenen Draht ausgebildet, und dass die Pflückfinger auf dem Trommelband in horizontalen Reihen insbesondere an Leisten angeordnet sind, welche Reihen nacheinander jeweils einen horizontalen Versatz um eine halbe Breite eines Pflückfingers aufweisen, und dass das dem Pflückraum zugeordnete Ende der Pflückfinger in den meisten Bereichen so geformt ist, dass diese eine in den Pflückraum hineinragende Spitze aufweisen, wobei am für das Erntegut einlaufenden Ende des Trommelbands bzw. der horizontalen Reihen nach zwei oder drei derartigen Pflückfingern eine Gruppe von Pflückfingern angeordnet ist, die entweder anstelle einer Spitze einen geraden Bü-gel oder eine Spitze, die parallel zur Oberfläche des Trommelbands gerichtet ist, aufweisen.

Das Klappband zum Transport und zur Aussiebung von darüber transportiertem zerkleinerten Erntegut unterschiedlicher Größe für eine Erntemaschine, insbesondere eine Hanfpflanzen-Erntemaschine, zum Pflücken von Blüten oder Dolden von einer zu erntenden Pflanze, wobei die Pflanze insbesondere eine Hanfpflanze ist, wobei das Klappband ein umlaufendes über Rollen an einem Gestell geführtes Band mit daran angelenkten Klapprechen ist, wobei die Klapprechen dadurch mit ihren Spitzen von der Oberfläche des Bandes über eine Schwenkachse senkrecht zur Laufrichtung des Bandes wegklappbar ausgestaltet sind, wobei durch die Zwischenräume der Fortsätze der Klapprechen Teile des Ernteguts beim Transport vermittels des Klappbands entsprechend ihrer Größe durch Hindurchfallen herausselektiert werden können, wobei auf den Klapprechen wenigstens den Fortsätzen der Klapprechen im wesentlichen formgleiche Schiebekulissen angeordnet sind, die auf den Klapprechen senkrecht zur Laufrichtung des Bandes verschiebbar angeordnet sind, wobei durch die Verschiebung der Schiebekulissen aus der Überdeckung mir den Klapprechen heraus die Durchfallöffnung der Klapprechen effektiv verringerbar ist. Dieses kann schräg nach oben führt und durch die zwischen Klapprechen und Schiebekulissen gebildeten Durchlässe die Größe der Erntegutteile entsprechend der einstellbaren Verschiebung der Klapprechen und der Schiebekulissen zueinander vorgewählt werden können.

Die Einstellung der Durchlässe erfolgt durch Lageverschiebung der Schiebekulissen auf bzw. zu den Klapprechen durch eine an dem ortsfesten Teil des Gestells angeordnete Verschiebe-Gleitflächen.

Die Schiebekulissen sind an den Klapprechen gelagert, wobei die Schiebekulissen durch Langlöcher und durch diese hindurchragende Befestigungselemente gegenüber den Klapprechen verschiebbar gelagert sind.

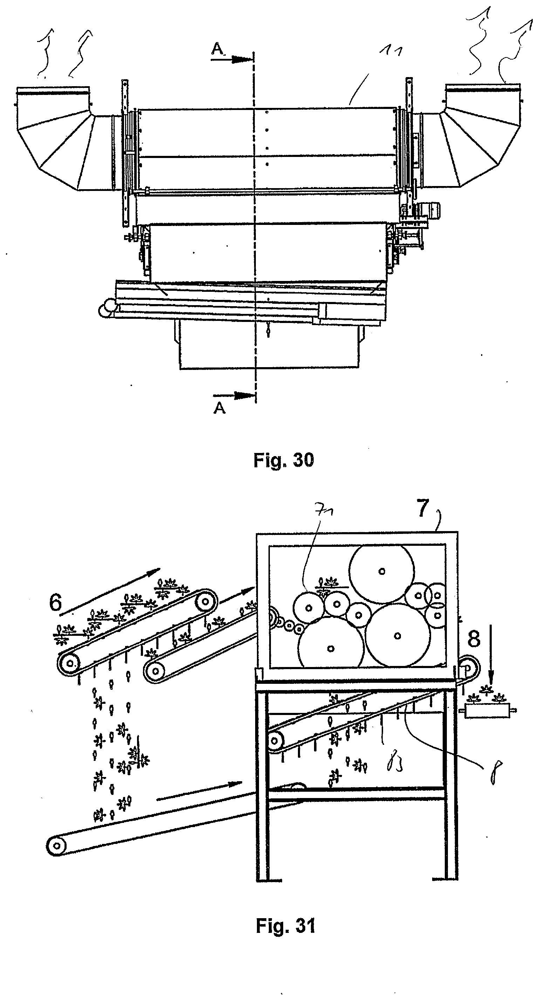

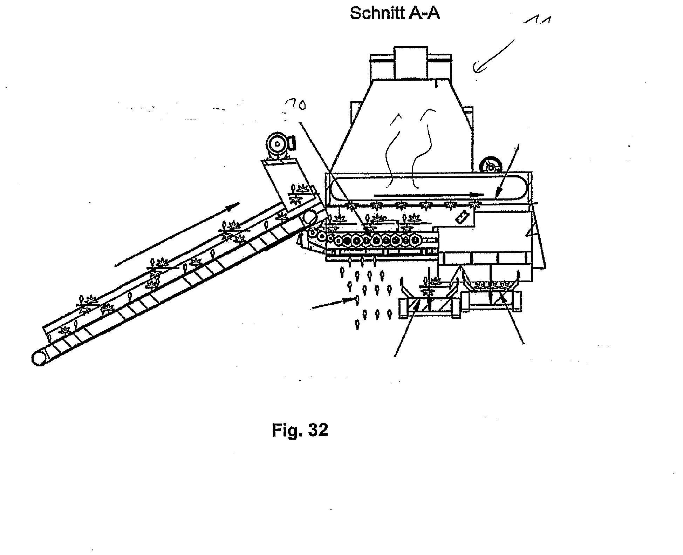

Der Windabsauger mit Rollenbandseparator (Fig. 30 32) für die Erntemaschine, insbesondere eine Hanfpflanzen-Erntemaschine, zum Separieren von Teilen, insbesondere von Blüten oder Dolden, einer geernteten Pflanze mit einem Stängel und Blättern, wobei die Pflanze insbesondere eine Hanfpflanze ist, wobei zum Transport und zur Aussiebung von darüber transportiertem zerkleinerten Erntegut unterschiedlicher Größe ein Rollenband angeordnet ist, welches senkrecht zur Laufrichtung und in der Ebene des Bandes nebeneinander angeordnete Rohre oder Rollen aufweist durch deren Abstände zueinander selektiv durch den gewählten Abstand der Rohre oder Rollen zueinander bevorzugt gewünschte Teile des Ernteguts absepariert werden, und dass oberhalb des Rollenbandes ein Gitterband angeordnet ist mit einer über dem Gitterband angeordneten Absaugvorrichtung welche durch einen Saugluftstrom leichte Pflanzenreste des Ernteguts vom Rollenband hoch, gegen das darüber liegende Gitterband gesaugt werden, sodass diese mit dem Gitterband aus dem Windabsauger heraus geführt werden können.

Um die Absaugvorrichtung herum ist ein Gehäuse angeordnet, dass über dem Gitterband endet und zu diesem offen ist.

Das Gitterband ist als an Umlenkrollen geführt umlaufendes Band ausgestaltet.

In oder an dem Gehäuse ist ein Gebläse angeordnet, dass den Saugluftstrom vom Rollenband durch das Gitterband und durch einen hierzu vorgesehenen, aus dem Gehäuse hin-ausführenden Abluftkanal erzeugt.

Die Laufrichtung des Rollenbands und der Gitterbands zum durch diese gebildeten Innenraum gleich ist und das Rollenband in Laufrichtung vor dem Gitterband endet, sodass das durch das Rollenband mitgeführte Material vor dem Ende des länger ausgestalteten Gitterbands gesammelt werden kann und das durch das das Gitterband mitgeführte Material nach verlassen des Bereichs des Saugluftstroms herunterfällt und separat gesammelt werden kann.

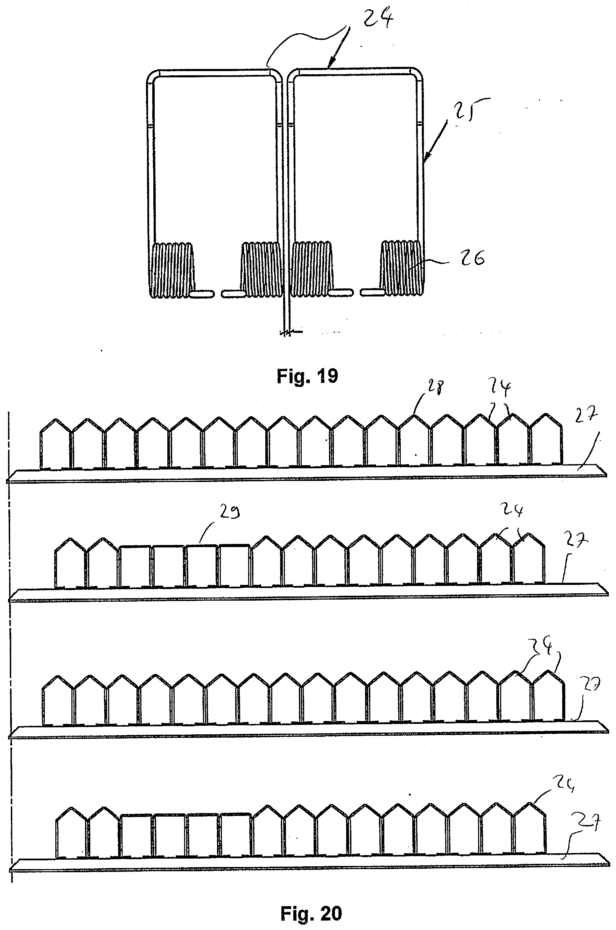

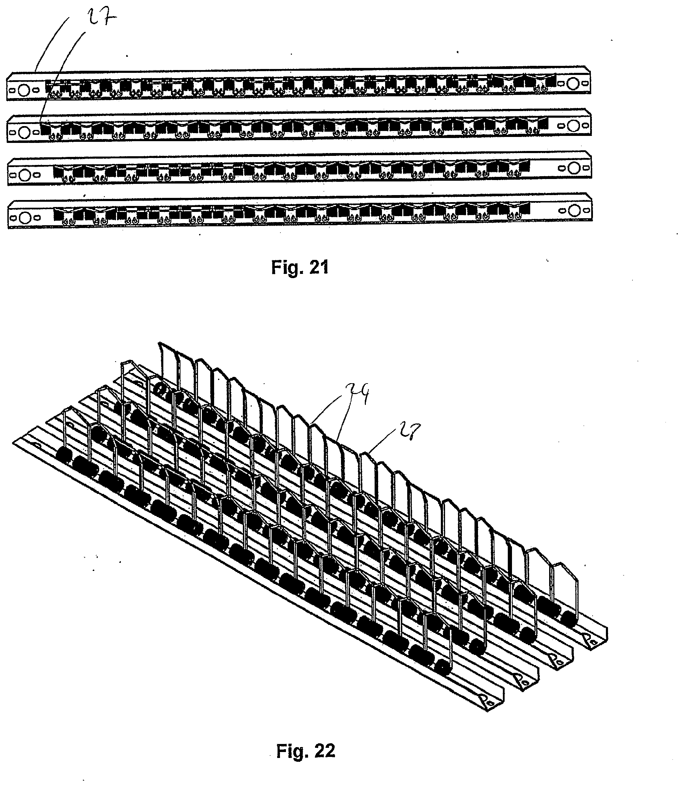

Die Pflückfingeranordnung (insbesondre Fig. 19 bis 22) für einen Bandpflücker 2 einer Erntemaschine 1, insbesondere eine Hanfpflanzen-Erntemaschine, zum Pflücken von Blüten oder Dolden 103 von einer zu erntenden Pflanze 100, wobei die Pflanze insbesondere eine Hanfpflanze ist, dadurch gekennzeichnet, dass die Pflückfinger 24 auf der Oberfläche eines Trommelbands 21 des Bandpflückers 2 linear senkrecht gegen die Laufrichtung des Trommelbands angeordnet sind, wobei die Pflückfinger 24 insbesondere mit einem Abstand zueinander angeordnet sind, und dass die Pflückfinger 24 durch an den Oberflächen 22 der Trommelbänder 21 in einen Pflückraum 23 hineinragende federnd (26) gelagerte Bügel 25 oder Ösen ausgebildet sind, wobei diese insbesondere aus einem gebogenen Draht ausgebildet sind.

Die Pflückfinger 24 sind auf dem Trommelband 21 in horizontalen Reihen insbesondere an Leisten 27 angeordnet, welche Reihen nacheinander jeweils einen horizontalen Versatz um eine halbe Breite eines Pflückfingers 24 auf der Oberfläche 22 des Trommelbands 21 aufweisen.

Das dem Pflückraum 23 zugeordnete Ende der Pflückfinger 24 ist in den meisten Bereichen so geformt, dass diese eine in den Pflückraum hineinragende Spitze 28 aufweisen, wobei am für das Erntegut einlaufenden Ende des Trommelbands bzw. der horizontalen Reihen nach zwei oder drei derartigen Pflückfingern eine Gruppe von Pflückfingern angeordnet ist, die entweder anstelle einer Spitze einen geraden Bügel 29 bzw. Abschnitt oder eine Spitze, die parallel zur Oberfläche des Trommelbands gerichtet ist, aufweisen.

Der Bandpflücker für eine Erntemaschine, insbesondere eine Hanfpflanzen-Erntemaschine, zum Pflücken von Blüten oder Dolden von einer zu erntenden Pflanze mit einem Stängel, wobei die Pflanze insbesondere eine Hanfpflanze ist, wobei der Bandpflücker wenigstens zwei sich gegenüberliegende Trommelbänder aufweist, wobei diese in dem Zwischenraum zwischen diesen einen Pflückraum für die zu erntenden Pflanzen bilden, wobei die Oberflächen der Trommelbänder im Pflückraum nach unten laufend angetrieben sind, wobei die Pflanzen vertikal, mit der Pflanzenspitze nach unten hängend durch den Pflückraum in einer Durchlaufrichtung an den Trommelbändern vorbeigeführt werden, zeichnet sich dadurch aus, dass an den Oberflächen der Trommelbänder Pflückfinger vorgesehen sind, wobei diese insbesondere mit einem Abstand zueinander angeordnet sind, und dass eine die Oberflächen der Trommelbänder wenigstens teilweise in den Pflückraum hineindrängende Bandoberflächenform-Einstellungsvorrichtung vorhanden ist, vermittels welcher die sich gegenüberliegenden Oberflächen der Trommelbänder aufeinander zu bauchig eingestellt werden können.

Die Bandoberflächenform-Einstellungsvorrichtung in Form wenigstens einer elastisch verformbaren Gleitschiene ausgebildet ist, welche zu einer die Trommelbänder in der umlaufenden Bewegung haltenden Zwangsführung ortsfest gelagert ist.

Die Gleitschiene ist an zwei Enden an der Rückseite der Trommelbänder zugeordnet gelagert und vermittels an der Bandoberflächenform-Einstellungsvorrichtung gelagerten Ausstellelementen elastisch federnd vorgespannt gegen die Rückseite der Trommelbänder aus einer Ruhelage gedrückt werden kann.

Die Ausstellelemente sind beispielsweise durch Exzenterscheiben ausgebildet deren Rotationsachsen parallel zur Oberfläche des Trommelbands verlaufen. Oder wie gezeigt, durch verschiebbare Rollen, die gegen das Trommelband drücken.

Die Bandoberflächenform-Einstellungsvorrichtung ist beispielsweise in Form wenigstens eines Führungselements ausgebildet, welches zu einer die Trommelbänder in der umlaufende Bewegung haltenden Zwangsführung ortsfest gelagert ist.

Die Führungselemente können durch Rollen, Scheiben oder in die Rückseite der Trommelbänder eingreifende Zahnräder ausgebildet sein, deren Rotationsachsen parallel zur der Oberfläche der Trommelbänder und deren Achsen an der Bandoberflächenform-Einstellungsvorrichtung an einer zu dieser verschiebbaren Lagervorrichtung gelagert sind.

Die Pflückfinger sind durch an den Oberflächen der Trommelbänder in den Pflückraum hineinragende federnd gelagerte Bügel oder Ösen ausgebildet, wobei diese insbesondere aus einem gebogenen Draht ausgebildet sind.

Die Pflückfinger sind auf dem Trommelband in horizontalen Reihen insbesondere an Leisten angeordnet, welche Reihen nacheinander jeweils einen horizontalen Versatz um eine halbe Breite eines Pflückfingers aufweisen.

In dem Pflückraum sind beispielsweise die zugeordneten Enden der Pflückfinger in den meisten Bereichen so geformt, dass diese eine in den Pflückraum hineinragende Spitze aufweisen, wobei am für das Erntegut einlaufenden Ende des Trommelbands bzw. der horizontalen Reihen nach zwei oder drei derartigen Pflückfingern eine Gruppe von Pflückfingern angeordnet ist, die entweder anstelle einer Spitze einen geraden Bügel oder eine Spitze, die parallel zur Oberfläche des Trommelbands gerichtet ist, aufweisen.

### Bezugszeichenliste

- 1: Erntemaschine
- 111: Einzugsarm
- 112: Schienenführung
- 11: Windabsauger
- 10: Rollenbandseparator
- 2: Pflücker / Bandpflücker
- 21: Trommelbänder
- 22: Oberflächen der Trommelbänder
- 23: Pflückraum
- 24: Pflückfinger
- 25: Bügel
- 26: Feder
- 27: Leiste
- 28: Spitze
- 29: gerader Bügel
- 3: Band
- 4: Band
- 5: Klappband
- 51: Rolle
- 52: Gestell
- 53: Klapprechen
- 54: Spitze
- 55: Schwenkachse
- 6: Gummiband
- 7: Nachpflücker
- 71: Sterringwalzen
- 8: Klappband
- 83: Klapprechen
- 9: Band
- 10: Rollenreiniger/Nachpflücker/Rollenbandseparator
- 11: Windabsaugung
- 12 13: Band
- 14: Band
- 15: Band
- 16: Band
- 17: Band
- 18: Band
- 19: Band
- 20: Windreiniger
- 21: Band
- 22: Band
- 23: Rohrbandsortierer
- 24: Band
- 25: Band
- 26: Band
- 27: Rollenreiniger
- 29: Band
- 32: Gummiband
- 33: Band
- 100: Hanfpflanze
- 101: Stängel
- 102: Blätter
- 103: Blüten / Dolden
- 104: Pflanzenspitze
- 105: Erntegut in Form von Dolden, Blüten, Blättern

## Patentansprüche

1. Windabsauger (11) mit Rollenbandseparator (1) für eine Erntemaschine, insbesondere eine Hanfpflanzen-Erntemaschine, zum Separieren von Teilen, insbesondere von Blüten oder Dolden, einer geernteten Pflanze mit einem Stängel und Blättern, wobei die Pflanze insbesondere eine Hanfpflanze ist,
wobei zum Transport und zur Aussiebung von darüber transportiertem zerkleinerten Erntegut (105) unterschiedlicher Größe ein Rollenband angeordnet ist,
welches senkrecht zur Laufrichtung und in der Ebene des Bandes nebeneinander angeordnete Rohre oder Rollen aufweist durch deren Abstände zueinander selektiv durch den gewählten Abstand der Rohre oder Rollen zueinander bevorzugt gewünschte Teile des Ernteguts absepariert werden,
und dass oberhalb des Rollenbandes ein Gitterband angeordnet ist mit einer über dem Gitterband angeordneten Absaugvorrichtung welche durch einen Saugluftstrom leichte Pflanzenreste des Ernteguts vom Rollenband hoch, gegen das darüber liegende Gitterband gesaugt werden, sodass diese mit dem Gitterband aus dem Windabsauger heraus geführt werden können,
**dadurch gekennzeichnet**
**dass** die Laufrichtung des Rollenbands und der Gitterbands zum durch diese gebildeten Innenraum gleich ist und das Rollenband in Laufrichtung vor dem Gitterband endet, sodass das durch das Rollenband mitgeführte Material vor dem Ende des länger ausgestalteten Gitterbands gesammelt werden kann und das durch das das Gitterband mitgeführte Material nach verlassen des Bereichs des Saugluftstroms herunterfällt und separat gesammelt werden kann.

2. Windabsauger nach Anspruch 1,
**dadurch gekennzeichnet,**
**dass** um die Absaugvorrichtung herum ein Gehäuse angeordnet ist, dass über dem Gitterband endet und zu diesem offen ist.

3. Windabsauger nach Anspruch 1 oder 2,
**dadurch gekennzeichnet,**
**dass** das Gitterband als an Umlenkrollen geführt umlaufendes Band ausgestaltet ist.

4. Windabsauger nach Anspruch 2 oder 3,
**dadurch gekennzeichnet,**
**dass** in oder an dem Gehäuse ein Gebläse angeordnet ist, dass den Saugluftstrom vom Rollenband durch das Gitterband und durch einen hierzu vorgesehenen, aus dem Gehäuse hinausführenden Abluftkanal erzeugt.

5. Erntemaschine,
**dadurch gekennzeichnet,**
**dass** diese wenigstens einen Windabsauger (11) nach einem der Ansprüche 1 bis 4 aufweist.

## Claims

1. Wind suction unit (11) with roller belt separator (1) for a harvesting machine, in particular a hemp plant harvesting machine, for separating parts, in particular flowers or inflorescences, of a harvested plant with a stem and leaves, wherein the plant is in particular a hemp plant,
wherein a roller belt is arranged for the transport and sieving of shredded harvested material (105) of different sizes transported thereon,
which has pipes or rollers arranged next to one another perpendicular to the running direction and in the plane of the belt, by means of whose spacing desired parts of the harvested material are selectively separated by the chosen spacing of the pipes or rollers,
and in that above the roller belt a mesh belt is arranged with a suction device arranged above the mesh belt, which suctions light plant residues of the harvested material from the roller belt upwards, against the mesh belt lying above, by means of a suction air flow, so that these can be guided out of the Wind suction unit together with the mesh belt,
**characterized in that** the running direction of the roller belt and of the mesh belt is the same toward the interior space formed thereby and that the roller belt ends, in running direction, before the mesh belt, which is formed to be longer, so that the material conveyed with the roller belt can be collected before the end of the mesh belt, and the material conveyed with the mesh belt can fall down after leaving the region of the suction air flow and can be collected separately.

2. Wind suction unit according to claim 1,
**characterized in that** a housing is arranged around the suction device, which ends above the mesh belt and is open toward it.

3. Wind suction unit according to claim 1 or 2,
**characterized in that** the mesh belt is designed as a circulating belt guided over deflection rollers.

4. Wind suction unit according to claim 2 or 3,
**characterized in that** a blower is arranged in or on the housing, which generates the suction air flow from the roller belt through the mesh belt and through an exhaust air duct provided for this purpose and leading out of the housing.

5. Harvesting machine,
**characterized in that** it comprises at least one Wind suction unit (11) according to one of claims 1 to 4.

## Revendications

1. Unité d'aspiration de vent (11) avec séparateur à bande à rouleaux (1) pour une machine de récolte, en particulier une machine de récolte de plantes de chanvre, pour séparer des parties, en particulier des fleurs ou des inflorescences, d'une plante récoltée avec une tige et des feuilles, ladite plante étant en particulier une plante de chanvre,
une bande à rouleaux étant disposée pour le transport et le tamisage de produit de récolte broyé (105) de tailles différentes transporté au-dessus,
ladite bande comportant des tubes ou des rouleaux disposés côte à côte perpendiculairement à la direction de déplacement et dans le plan de la bande, par l'espacement desquels des parties souhaitées du produit de récolte sont séparées sélectivement grâce à la distance choisie entre les tubes ou les rouleaux,
et en ce qu'au-dessus de la bande à rouleaux est disposée une bande grillagée avec un dispositif d'aspiration disposé au-dessus de la bande grillagée, qui, par un flux d'air d'aspiration, aspire vers le haut les résidus végétaux légers du produit de récolte depuis la bande à rouleaux contre la bande grillagée située au-dessus, de sorte que ceux-ci peuvent être évacués de l'unité d'aspiration de vent avec la bande grillagée,
**caractérisé en ce que** la direction de déplacement de la bande à rouleaux et de la bande grillagée est la même vers l'espace intérieur formé par celles-ci, et **en ce que** la bande à rouleaux se termine, dans la direction de déplacement, avant la bande grillagée plus longue, de sorte que le matériau transporté avec la bande à rouleaux peut être collecté avant la fin de la bande grillagée et que le matériau transporté avec la bande grillagée peut tomber après avoir quitté la zone du flux d'air d'aspiration et être collecté séparément.

2. Unité d'aspiration de vent selon la revendication 1,
**caractérisée en ce qu'**un boîtier est disposé autour du dispositif d'aspiration, lequel se termine au-dessus de la bande grillagée et est ouvert vers celle-ci.

3. Unité d'aspiration de vent selon la revendication 1 ou 2,
**caractérisée en ce que** la bande grillagée est conçue comme une bande circulante guidée sur des rouleaux de renvoi.

4. Unité d'aspiration de vent selon la revendication 2 ou 3,
**caractérisée en ce qu'**un ventilateur est disposé dans ou sur le boîtier, lequel génère le flux d'air d'aspiration depuis la bande à rouleaux à travers la bande grillagée et au travers d'un canal d'air d'échappement prévu à cet effet et menant hors du boîtier.

5. Machine de récolte,
**caractérisée en ce qu'**elle comprend au moins une unité d'aspiration de vent (11) selon l'une des revendications 1 à 4.
